# EUROPÄISCHE PATENTSCHRIFT

(11) **EP 3 808 587 B1**
(45) Veröffentlichungstag und Bekanntmachung des Hinweises auf die Patenterteilung: **27.10.2021**
(21) Anmeldenummer: 20196969.8
(22) Anmeldetag: 18.09.2020
(51) Int. Cl.: B60K 6/387, B60K 6/48

(54) **VERFAHREN ZUR DEAKTIVIERUNG EINES PARKSPERRENMECHANISMUS EINES HYBRIDANTRIEBSSTRANGS FÜR EIN KRAFTFAHRZEUG**
METHOD FOR DEACTIVATING A PARKING LOCK MECHANISM OF A HYBRID DRIVE TRAIN FOR A MOTOR VEHICLE
PROCÉDÉ DE DÉSACTIVATION D'UN MÉCANISME DE VERROUILLAGE DU STATIONNEMENT D'UN GROUPE MOTOPROPULSEUR HYBRIDE POUR UN VÉHICULE AUTOMOBILE

(30) Priorität: 02.10.2019 DE 102019215260
(43) Veröffentlichungstag der Anmeldung: 21.04.2021
(73) Patentinhaber: Magna PT B.V. & Co. KG, 74199 Untergruppenbach (DE)
(72) Erfinder: WENDT, Moritz, 74199 Untergruppenbach (DE); SCHALLER, Martin, 64732 Bad König (DE); PROST, Jacques, 74074 Heilbronn (DE); KIEHLNEKER, Alexander, 74223 Flein (DE); STEPPER, Thorsten, 74638 Waldenburg (DE); KECK, Ingo, 74199 Untergruppenbach (DE); FILP, Mathias, 74199 Untergruppenbach (DE)
(74) Vertreter: Zangger, Bernd

(56) Entgegenhaltungen:
- EP-A1- 2 759 435
- DE-A1-102008 014 271
- DE-A1-102014 108 181

## Beschreibung

### Gebiet der Erfindung

Die vorliegende Erfindung betrifft ein Verfahren zur Deaktivierung eines Parksperrenmechanismus eines Hybridantriebsstrangs für ein Kraftfahrzeug, wobei der Hybridantriebsstrang ein Doppelkupplungsgetriebe mit einer Doppelkupplung, eine Verbrennungskraftmaschine, zumindest eine elektrische Maschine, wobei die Verbrennungskraftmaschine wie auch die elektrische Maschine mit dem Doppelkupplungsgetriebe antriebswirksam verbunden oder verbindbar ist, und einen Parksperrenmechanismus zum formschlüssigen Feststellen eines Abtriebs des Hybridantriebsstrangs aufweist.

### Stand der Technik

Hybridisierte Antriebsstränge für ein Kraftfahrzeug, die ein Doppelkupplungsgetriebe aufweisen, sind im Stand der Technik allgemein bekannt.

Derartige Antriebsstränge weisen in der gängisten Form zumindest zwei Antriebseinheiten auf, nämlich zumindest eine Verbrennungskraftmaschine und eine elektrische Maschine. Die Kombination dieser beiden Antriebe kann auf unterschiedlichste Weise erfolgen. Je nachdem wie die Verbrennungskraftmaschine, die elektrische Maschine und das Doppelkupplungsgetriebe angeordnet sind, unterscheidet man grundsätzlich zwischen seriellen, parallelen und leistungsverzweigten Hybridantriebssträngen. Weiterhin kommen auch vielfach Mischformen dieser drei Grundstrukturen zum Einsatz, die die Vorteile der jeweiligen Strukturen kombinieren. Die gängigste Form in der Hybridfahrzeugtechnik stellt die parallele Hybridantriebsstranganordnung dar, bei der der elektrische Pfad parallel zum verbrennungsmotorischen Pfad verläuft und die Leistung beider Systeme zum Antrieb des Fahrzeugs mechanisch überlagert wird. Hierbei kann die elektrische Maschine an unterschiedlichen Stellen im Antriebsstrang angeordnet sein, wodurch sich jeweils spezifische Vor- und Nachteile ergeben. Nach der Position der elektrischen Maschine im Antriebsstrang des Kraftfahrzeugs unterscheidet man im Allgemeinen zwischen einem P1, einem P2, einem P3 und einem P4 Parallelhybridantriebsstrang. Auch hier sind jedoch oftmals Mischformen erwünscht, die die Vorteile der jeweiligen Ausführungen kombinieren.

Doppelkupplungsgetriebe sind im Stand der Technik ebenso allgemein bekannt. Sie weisen zwei Teilgetriebe auf, von denen eines den geraden Gangstufen und das andere den ungeraden Gangstufen zugeordnet ist. Doppelkupplungsgetriebe weisen weiterhin zwei Eingangswellen auf, die mit einer Doppelkupplungsanordnung verbunden sind, die wiederum zwei unabhängig voneinander ansteuerbare Reibkupplungen aufweist. Ein Eingang der Doppelkupplungsanordnung ist dabei in der Regel mit einer Antriebseinheit, wie beispielsweise einer Verbrennungskraftmaschine, verbunden. Durch überschneidende Betätigung der beiden Reibkupplungen können Gangwechsel zugunterbrechungsfrei durchgeführt werden.

Bei Doppelkupplungsgetrieben wird in der Regel auch eine Parksperrenanordnung vorgesehen, die durch einen Wahlschalter im Fahrgastraum betätigbar ist. Meist sind derartige Parksperrenanordnungen durch Parksperrenräder realisiert, die fest mit einer Abtriebswelle verbunden sind, die auf die Räder des Kraftfahrzeugs wirkt. Das Sperren bzw. Entriegeln des Parksperrenrads erfolgt in der Regel über eine Parksperrenklinke.

Bei eingelegter Parksperre wird ein über die Antriebsräder abtriebsseitig an dem Doppelkupplungsgetriebe anliegendes Drehmoment von der Sperrklinke abgestützt. Das Drehmoment wird beispielsweise dadurch erzeugt, dass ein Kraftfahrzeug in Vorwärtsfahrtrichtung bergauf oder bergab steht und die dabei an dem Kraftfahrzeug angreifende Hangabtriebskraft abtriebsseitig in den Antriebsstrang eingeleitet wird. Durch das Blockieren der Getriebeabtriebswelle über die Parksperre wird der Antriebsstrang zwischen den Abtriebsrädern und der Parksperre vorgespannt. Beim Auslegen der Parksperre wird die Vorspannung des Antriebstrangs schlagartig in Form eines Entlastungsstoßes abgebaut, der als unangenehmes akustisches Geräusch wahrnehmbar ist und die betroffenen Bauteile des Doppelkupplungsgetriebes mechanisch belastet. Dokument DE102008014271A1 offenbart ein Verfahren zur Steuerung eines automatisierten Antriebsstrangs für Kraftfahrzeuge, wobei der Antriebsstrang ein Getriebe mit mindestens einer Getriebeeingangswelle aufweist, die mit einem Motor des Kraftfahrzeugs und mit einer Getriebeausgangswelle verbindbar ist, die mit Antriebsrädern des Kraftfahrzeugs verbunden werden kann, wobei der Antriebsstrang einen Parksperrenmechanismus aufweist, mittels dessen eine insbesondere formschlüssige Verbindung zwischen dem Antriebsstrang und einem feststehenden Abschnitt des Kraftfahrzeugs eingerichtet werden kann.

### Zusammenfassung der Erfindung

Es ist eine Aufgabe der Erfindung ein verbessertes Verfahren zur Deaktivierung eines Parksperrenmechanismus in einem Hybridantriebsstrang mit einem Doppelkupplungsgetriebe anzugeben.

Die Lösung der Aufgabe erfolgt durch ein Verfahren zur Deaktivierung eines Parksperrenmechanismus eines Hybridantriebsstrangs für ein Kraftfahrzeug, wobei der Hybridantriebsstrang ein Doppelkupplungsgetriebe mit einer Doppelkupplung, eine Verbrennungskraftmaschine, zumindest eine elektrische Maschine, wobei die Verbrennungskraftmaschine wie auch die elektrische Maschine mit dem Doppelkupplungsgetriebe antriebswirksam verbunden oder verbindbar ist, und einen Parksperrenmechanismus zum formschlüssigen Feststellen eines Abtriebs des Hybridantriebsstrangs aufweist, wobei der Parksperrenmechanismus durch einen entsprechenden Fahrerwunsch aktiviert ist, umfassend die folgenden Schritte:
- Ermittlung einer Parkposition des Kraftfahrzeugs,
- Ermittlung des Betriebszustands der Verbrennungskraftmaschine,
- Schließen der Doppelkupplung bei stillstehender Verbrennungskraftmaschine,
- Aktivierung der elektrischen Maschine und Übertragung eines Antriebsmoments auf den Abtrieb des Hybridantriebsstrangs in Abhängigkeit von der ermittelten Parkposition des Kraftfahrzeugs, und
- Auslegen des Parksperrenmechanismus.

Das erfindungsgemäße Verfahren ist entsprechend der vorliegenden Erfindung in einem Hybridantriebsstrang anzuwenden, der erfindungsgemäß zwei Antriebseinheiten, nämlich eine Verbrennungskraftmaschine und eine elektrische Maschine, ein Doppelkupplungsgetriebe und einen Parksperrenmechanismus aufweist.

Sowohl die Verbrennungskraftmaschine wie auch die elektrische Maschine ist erfindungsgemäß mit dem Doppelkupplungsgetriebe antriebswirksam verbunden oder verbindbar. Weiterhin erfindungsgemäß weist das Doppelkupplungsgetriebe eine Doppelkupplung auf.

Der Parksperrenmechanismus dient dem formschlüssigen Feststellen eines Abtriebs des Hybridantriebsstrangs.

Das erfindungsgemäße Verfahren findet Anwendung, wenn der Parksperrenmechanismus durch einen entsprechenden Fahrerwunsch aktiviert ist und umfasst entsprechend der vorliegenden Erfindung die folgenden Schritte:
- Ermittlung einer Parkposition des Kraftfahrzeugs,
- Ermittlung des Betriebszustands der Verbrennungskraftmaschine,
- Schließen der Doppelkupplung bei stillstehender Verbrennungskraftmaschine,
- Aktivierung der elektrischen Maschine und Übertragung eines Antriebsmoments auf den Abtrieb des Hybridantriebsstrangs in Abhängigkeit von der ermittelten Parkposition des Kraftfahrzeugs, und
- Auslegen des Parksperrenmechanismus.

Unter einer Ermittlung der Parkposition des Kraftfahrzeugs ist in diesem Zusammenhang die Ermittlung der Neigung des geparkten Kraftfahrzeugs zu verstehen. Diese Ermittlung kann beispielsweise über eine geeignete Sensorik sowie Auswerteeinheit erfolgen.

Weiterbildungen der Erfindung sind in den abhängigen Ansprüchen, der Beschreibung sowie den beigefügten Zeichnungen angegeben.

In einer ersten Parkposition des Kraftfahrzeugs dreht die elektrische Maschine bei Aktivierung bevorzugt in eine erste Drehrichtung.

Unter einer ersten Parkposition ist in diesem Zusammenhang eine Position des geparkten Kraftfahrzeugs zu verstehen, in der es in Vorwärtsfahrtrichtung bergab steht.

In einer zweiten Parkposition des Kraftfahrzeugs dreht die elektrische Maschine bei Aktivierung bevorzugt in eine zweite Drehrichtung, nämlich eine Drehrichtung entgegen der ersten Drehrichtung.

Unter einer zweiten Parkposition ist in diesem Zusammenhang eine Position des geparkten Kraftfahrzeugs zu verstehen, in der es in Vorwärtsfahrtrichtung bergauf steht.

Vorzugsweise weist das Doppelkupplungsgetriebe ein erstes Teilgetriebe, dem sämtliche ungeraden Gangstufen zugeordnet sind, und ein zweites Teilgetriebe, dem sämtliche geraden Gangstufen sowie eine Rückwärtsgangstufe zugeordnet sind, auf, wobei die elektrische Maschine über eine Gangstufe des zweiten Teilgetriebes antriebswirksam mit dem Doppelkupplungsgetriebe verbunden oder verbindbar ist.

Vorzugsweise wird bei aktiviertem Parksperrenmechanismus im ersten Teilgetriebe eine Gangstufe, nämlich die Gangstufe mit der höchsten Übersetzung, eingelegt.

Vorzugsweise erfolgt die der Drehmomentübertragung des seitens der elektrischen Maschine bereitgestellten Drehmoments bei Durchführung des erfindungsgemäßen Verfahrens über das zweite Teilgetriebe, eine zweite Kupplung der Doppelkupplung, die dem zweiten Teilgetriebe zugeordnet ist, die Verbrennungskraftmaschine, eine erste Kupplung der Doppelkupplung, die dem ersten Teilgetriebe zugeordnet ist, das erste Teilgetriebe, die Gangstufe des ersten Teilgetriebes mit der höchsten Übersetzung an den Abtrieb des Hybridantriebsstrangs.

Durch das erfindungsgemäße Verfahren kann die Neigung des Kraftfahrzeugs ermittelt bzw. erkannt werden und in Abhängigkeit von diesem Ergebnis über das Schließen der beiden Kupplungen der Doppelkupplung Antriebsmoment seitens der elektrischen Maschine in den Antriebsstrang eingeleitet werden, sodass ein Gegenmoment zu dem durch die Hangabtriebskraft erzeugten Drehmoment auf den Parksperrenmechanismus aufgebracht werden kann.

### Kurzbeschreibung der Zeichnungen

Die Erfindung wird im Folgenden beispielhaft unter Bezugnahme auf die Zeichnungen beschrieben.

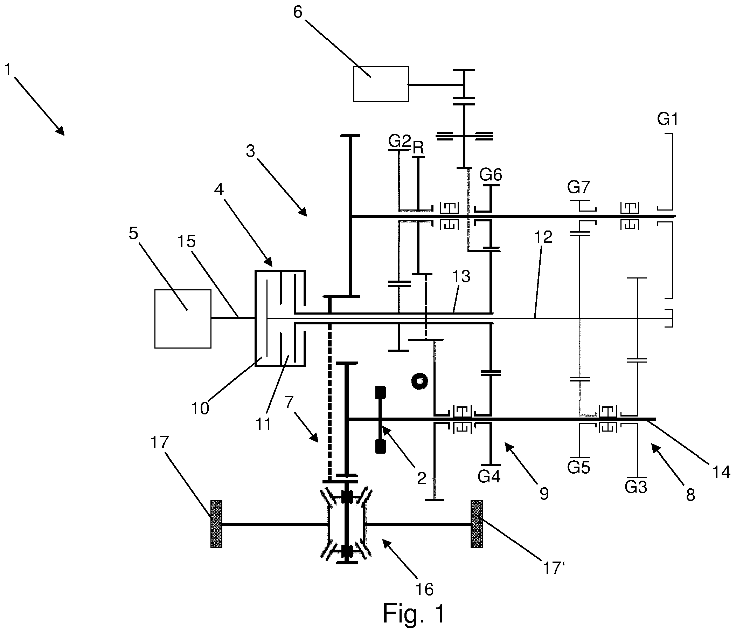

- Fig. 1: zeigt eine schematische Teilansicht eines Hybridantriebsstranges.

### Detaillierte Beschreibung der Erfindung

Das erfindungsgemäße Verfahren wird im Folgenden anhand des in Fig. 1 dargestellten Hybridantriebsstrangs 1 beschreiben. Der dargestellte Hybridantriebsstrang 1 ist lediglich als eine beispielhafte Ausführungsform eines Hybridantriebsstrangs 1, der sich zur Durchführung des erfindungsgemäßen Verfahrens eignet, anzusehen. Es versteht sich von selbst, dass das erfindungsgemäße Verfahren auch in anders aufgebauten Hybridantriebssträngen 1 Anwendung finden kann.

Der in Fig. 1 teilweise dargestellte Hybridantriebsstrang 1 weist zwei Antriebseinheiten, nämlich eine Verbrennungskraftmaschine 5 und eine elektrische Maschine 6, ein Doppelkupplungsgetriebe 3 und einen Parksperrenmechanismus 2 auf.

Das Doppelkupplungsgetriebe 3 weist eine Doppelkupplung 4 mit einer ersten Kupplung 10 und einer zweiten Kupplung 11 sowie zwei Teilgetriebe, nämlich ein erstes Teilgetriebe 8 und ein zweites Teilgetriebe 9, auf. Die erste Kupplung 10 und die zweite Kupplung 11 sind unabhängig voneinander ansteuerbar und jeweils als Reibkupplung ausgeführt. Die erste Kupplung 10 ist über eine erste Eingangswelle 12 mit dem ersten Teilgetriebe 8 verbunden. Die zweite Kupplung 11 ist über eine zweite Eingangswelle 13 mit dem zweiten Teilgetriebe 9 antriebswirksam verbunden. Das in Fig. 1 dargestellte Doppelkupplungsgetriebe 3 weist sieben Vorwärtsgangstufen G1, G2, G3, G4, G5, G6, G7 und eine Rückwärtsgangstufe R auf. Dabei sind dem ersten Teilgetriebe 8 sämtliche ungeraden Vorwärtsgangstufen G1, G3, G5, G7 und dem zweiten Teilgetriebe 9 sämtliche geraden Vorwärtsgangstufen G2, G4, G6 und die Rückwärtsgangstufe R zugeordnet.

Die Verbrennungskraftmaschine 5 ist mit einem Eingang 15 der Doppelkupplung 4 antriebswirksam verbunden.

Die elektrische Maschine 6 kann sowohl als Generator wie auch als Elektromotor betrieben werden. Die elektrische Maschine 6 ist über eine sechste Vorwärtsgangstufe G6 mit dem zweiten Teilgetriebe 9 des Doppelkupplungsgetriebes 3 antriebswirksam verbunden.

Der Parksperrenmechanismus 2 wirkt auf einen Abtrieb 7 des Hybridantriebsstrangs 1. Er ist auf einer Getriebeabtriebswelle 14 des Doppelkupplungsgetriebes 3, angeordnet. Diese Getriebeabtriebswelle 14 ist antriebswirksam mit einer Achse 16 des Kraftfahrzeugs und somit mit Abtriebsrädern 17, 17' des Kraftfahrzeugs verbunden. Der Parksperrenmechanismus 2 weist ein Parksperrenrad (nicht im Detail dargestellt) und eine Parksperrenklinke (nicht im Detail dargestellt) auf. Das Parksperrenrad ist fest, d.h. drehfest und axial fest, auf der Getriebeabtriebswelle 14 angeordnet. Die Parksperrenklinke ist schwenkbar gelagert, beispielsweise auf einer an einem Getriebegehäuse festgelegten Achse, und kann bei Aktivierung des Parksperrenmechanismus 2 mit dem Parksperrenrad in eine Sperrstellung gebracht werden. Wird die Parksperrenklinke mit dem Parksperrenrad in Sperrstellung gebracht, ist die Getriebeabtriebswelle14 blockiert und kann nicht weiterdrehen.

Die Aktivierung des Parksperrenmechanismus 2 erfolgt durch den Fahrer, indem er einen Wählhebel im Fahrgastraum auf eine Parkstellung, nämlich "P", stellt. Eine Deaktivierung des Parksperrenmechanismus 2 erfolgt ebenfalls in Abhängigkeit von einer entsprechenden Fahrerwunschvorgabe, wobei der Fahrer hierzu den Wählhebel aus der Parkstellung in eine beliebige andere Wählhebelposition bewegt.

Wird das Kraftfahrzeug an einem Hang abgestellt, in Vorwärtsfahrtrichtung bergauf oder bergab, und der Parksperrenmechanismus 2 aktiviert, so stützt sich das Drehmoment, das sich aufgrund der Hangabtriebskraft ergibt, über die mit dem Parksperrenrad in Sperrstellung stehende Sperrklinke am Getriebegehäuse ab.

Wird nun, ohne das erfindungsgemäße Verfahren anzuwenden, der Parksperrenmechanismus 2 seitens des Fahrers deaktiviert, kommt es zu einem Entlastungsstoß im Hybridantriebsstrang 1. Durch die Anwendung des erfindungsgemäßen Verfahrens kann dies jedoch verhindert werden. Dazu wird zunächst über das erfindungsgemäße Verfahren die Neigung, in der das Kraftfahrzeug geparkt wurde, festgestellt. In weiterer Folge wird der Betriebszustand der Verbrennungskraftmaschine 5 überprüft. Bei Stillstand der Verbrennungskraftmaschine 5 kommt es in einem nächsten Schritt zu einem Schließen der Doppelkupplung 4 des Doppelkupplungsgetriebes 3, nämlich sowohl der ersten Kupplung 10 wie auch der zweiten Kupplung 11. In einem nächsten Schritt wird die elektrische Maschine 6 aktiviert und es kommt zu einer Übertragung eines Antriebsmoments seitens der elektrischen Maschine 6 auf die Getriebeabtriebswelle 14 des Doppelkupplungsgetriebes 3 und somit auf den Abtrieb 7 des Hybridantriebsstrangs 1. Die Höhe bzw. die Art des eingeleiteten Drehmoments erfolgt in Abhängigkeit von der ermittelten Parkposition des Kraftfahrzeugs. Bei Einleitung des Gegenmoments seitens der elektrischen Maschine 6 kann der Parksperrenmechanismus 2 deaktiviert werden, ohne, dass es zu einem Entlastungsstoß kommt. Über die elektrische Maschine 6 wird somit aktiv ein Gegenmoment bereitgestellt.

### Bezugszeichenliste

- 1: Hybridantriebsstrang
- 2: Parksperrenmechanismus
- 3: Doppelkupplungsgetriebe
- 4: Doppelkupplung
- 5: Verbrennungskraftmaschine
- 6: Elektrische Maschine
- 7: Abtrieb (des Hybridantriebsstrangs)
- 8: Erstes Teilgetriebe
- 9: Zweites Teilgetriebe
- 10: Erste Kupplung
- 11: Zweite Kupplung
- 12: Erste Eingangswelle
- 13: Zweite Eingangswelle
- 14: Getriebeabtriebswelle
- 15: Eingang (der Doppelkupplung)
- 16: Achse (des Kraftfahrzeugs)
- 17, 17': Rad

- G1: Erste Vorwärtsgangstufe
- G2: Zweite Vorwärtsgangstufe
- G3: Dritte Vorwärtsgangstufe
- G4: Vierte Vorwärtsgangstufe
- G5: Fünfte Vorwärtsgangstufe
- G6: Sechste Vorwärtsgangstufe
- G7: Siebte Vorwärtsgangstufe
- R: Rückwärtsgangstufe

## Patentansprüche

1. Verfahren zur Deaktivierung eines Parksperrenmechanismus (2) eines Hybridantriebsstrangs (1) für ein Kraftfahrzeug, wobei der Hybridantriebsstrang (1) ein Doppelkupplungsgetriebe (3) mit einer Doppelkupplung (4), eine Verbrennungskraftmaschine (5), zumindest eine elektrische Maschine (6), wobei die Verbrennungskraftmaschine (5) wie auch die elektrische Maschine (6) mit dem Doppelkupplungsgetriebe (3) antriebswirksam verbunden oder verbindbar ist, und einen Parksperrenmechanismus (2) zum formschlüssigen Feststellen eines Abtriebs (7) des Hybridantriebsstrangs (1) aufweist, wobei der Parksperrenmechanismus (2) durch einen entsprechenden Fahrerwunsch aktiviert ist, umfassend die folgenden Schritte:
- Ermittlung einer Parkposition des Kraftfahrzeugs, nämlich Ermittlung der Neigung des geparkten Kraftfahrzeugs,
- Ermittlung des Betriebszustands der Verbrennungskraftmaschine (5),
- Schließen der Doppelkupplung (4) bei stillstehender Verbrennungskraftmaschine (5),
- Aktivierung der elektrischen Maschine (6) und Übertragung eines Antriebsmoments auf den Abtrieb (7) des Hybridantriebsstrangs (1) in Abhängigkeit von der ermittelten Parkposition des Kraftfahrzeugs, und
- Auslegen des Parksperrenmechanismus (2).

2. Verfahren nach Anspruch 1,
**dadurch gekennzeichnet, dass** in einer ersten Parkposition des Kraftfahrzeugs, nämlich einer Position des geparkten Kraftfahrzeugs, in der es in Vorwärtsfahrtrichtung bergab steht, die elektrische Maschine (6) bei Aktivierung in eine erste Drehrichtung dreht.

3. Verfahren nach Anspruch 2,
**dadurch gekennzeichnet, dass** in einer zweiten Parkposition des Kraftfahrzeugs, nämlich einer Position des geparkten Kraftfahrzeugs, in der es in Vorwärtsfahrtrichtung bergauf steht, die elektrische Maschine (6) bei Aktivierung in eine zweite Drehrichtung, nämlich eine Drehrichtung entgegen der ersten Drehrichtung, dreht.

4. Verfahren nach Anspruch 1, 2 oder 3,
**dadurch gekennzeichnet, dass** das Doppelkupplungsgetriebe (3) ein erstes Teilgetriebe (8), dem sämtliche ungeraden Gangstufen (G1, G3, G5, G7) zugeordnet sind, und ein zweites Teilgetriebe (9), dem sämtliche geraden Gangstufen (G2, G4, G6) sowie eine Rückwärtsgangstufe (R) zugeordnet sind, aufweist, wobei die elektrische Maschine (6) über eine Gangstufe (G6) des zweiten Teilgetriebes (9) antriebswirksam mit dem Doppelkupplungsgetriebe (3) verbunden oder verbindbar ist.

5. Verfahren nach Anspruch 4,
**dadurch gekennzeichnet, dass** bei aktiviertem Parksperrenmechanismus (2) im ersten Teilgetriebe (8) eine Gangstufe (G1), nämlich die Gangstufe mit der höchsten Übersetzung, eingelegt wird.

6. Verfahren nach Anspruch 5,
**dadurch gekennzeichnet, dass** das Drehmoment seitens der elektrischen Maschine (6) über das zweite Teilgetriebe (9), eine zweite Kupplung (11) der Doppelkupplung (4), die dem zweiten Teilgetriebe (9) zugeordnet ist, die Verbrennungskraftmaschine (5), eine erste Kupplung (10) der Doppelkupplung (4), die dem ersten Teilgetriebe (8) zugeordnet ist, das erste Teilgetriebe (8) und die Gangstufe (G1) mit der höchsten Übersetzung an den Abtrieb (7) des Hybridantriebsstrangs (1) übertragen wird.

## Claims

1. Method for deactivating a parking lock mechanism (2) of a hybrid drive train (1) for a motor vehicle, the hybrid drive train (1) comprising a double clutch transmission (3) with a double clutch (4), an internal combustion engine (5), at least one electric machine (6), the internal combustion engine (5) and the electric machine (6) being drive-connected or being capable of being drive-connected to the double clutch transmission (3), and a parking lock mechanism (2) for positively locking fixing of an output (7) of the hybrid drive train (1), the parking lock mechanism (2) being activated by way of a corresponding driver request, comprising the following steps:
- determining of a parked position of the motor vehicle, namely determining of the inclination of the parked motor vehicle,
- determining of the operating state of the internal combustion engine (5),
- closing of the double clutch (4) in the case of a stationary internal combustion engine (5),
- activating of the electric machine (6) and transmitting of a drive torque to the output (7) of the hybrid drive train (1) in a manner which is dependent on the determined parked position of the motor vehicle, and
- disengaging of the parking lock mechanism (2).

2. Method according to Claim 1,
**characterized in that**, in a first parked position of the motor vehicle, namely a position of the parked motor vehicle, in which it faces downhill in the forward driving direction, the electric machine (6) rotates in a first rotational direction in the case of activation.

3. Method according to Claim 2,
**characterized in that**, in a second parked position of the motor vehicle, namely a position of the parked motor vehicle in which it faces uphill in the forward driving direction, the electric machine (6) rotates in a second rotational direction in the case of activation, namely a rotational direction counter to the first rotational direction.

4. Method according to Claim 1, 2 or 3,
**characterized in that** the double clutch transmission (3) comprises a first sub-transmission (8) which is assigned all the odd gear stages (G1, G3, G5, G7), and a second sub-transmission (9) which is assigned all the even gear stages (G2, G4, G6) and a reverse gear stage (R), the electric machine (6) being drive-connected or being capable of being drive-connected to the double clutch transmission (3) via a gear stage (G6) of the second sub-transmission (9).

5. Method according to Claim 4,
**characterized in that**, in the case of an activated parking lock mechanism (2), a gear stage (G1), namely the gear stage with the highest transmission ratio, is engaged in the first sub-transmission (8).

6. Method according to Claim 5,
**characterized in that** the torque on the part of the electric machine (6) is transmitted via the second sub-transmission (9), a second clutch (11) of the double clutch (4) which is assigned to the second sub-transmission (9), the internal combustion engine (5), a first clutch (10) of the double clutch (4) which is assigned to the first sub-transmission (8), the first sub-transmission (8) and the gear stage (G1) with the highest transmission ratio, to the output (7) of the hybrid drive train (1).

## Revendications

1. Procédé de désactivation d'un mécanisme de verrouillage de stationnement (2) d'un groupe motopropulseur hybride (1) pour un véhicule automobile, le groupe motopropulseur hybride (1) présentant une boîte de vitesses à double embrayage (3) dotée d'un double embrayage (4), une machine à combustion interne (5), au moins une machine électrique (6), à la fois la machine à combustion interne (5) et la machine électrique (6) étant ou pouvant être reliées en entraînement à la boîte de vitesses à double embrayage (3), et un mécanisme de verrouillage de stationnement (2) pour le blocage par complémentarité de forme d'une sortie (7) du groupe motopropulseur hybride (1), le mécanisme de verrouillage de stationnement (2) étant activé par un souhait du conducteur correspondant, comprenant les étapes suivantes consistant à :
- déterminer une position de stationnement du véhicule automobile, notamment déterminer l'inclinaison du véhicule automobile en stationnement,
- déterminer l'état de fonctionnement de la machine à combustion interne (5),
- fermer le double embrayage (4) lorsque la machine à combustion interne (5) est à l'arrêt,
- activer la machine électrique (6), et transmettre un couple d'entraînement à la sortie (7) du groupe motopropulseur hybride (1) en fonction de la position de stationnement déterminée du véhicule automobile, et
- prévoir le mécanisme de verrouillage de stationnement (2).

2. Procédé selon la revendication 1, **caractérisé en ce que** dans une première position de stationnement du véhicule automobile, notamment dans une position du véhicule automobile en stationnement dans laquelle il est placé en descente dans le sens de la marche avant, la machine électrique (6) tourne dans un premier sens de rotation lorsqu'elle est activée.

3. Procédé selon la revendication 2, **caractérisé en ce que** dans une deuxième position de stationnement du véhicule automobile, notamment dans une position du véhicule automobile en stationnement dans laquelle il est placé en montée dans le sens de la marche avant, la machine électrique (6) tourne dans un deuxième sens de rotation lorsqu'elle est activée, notamment dans un sens de rotation à l'opposé du premier sens de rotation.

4. Procédé selon la revendication 1, 2 ou 3, **caractérisé en ce que** la boîte de vitesses à double embrayage (3) présente une première transmission partielle (8) à laquelle sont associés tous les rapports de vitesse impairs (G1, G3, G5, G7), et une deuxième transmission partielle (9) à laquelle sont associés tous les rapports de vitesse pairs (G2, G4, G6) ainsi qu'un rapport de marche arrière (R), la machine électrique (6) étant ou pouvant être reliée en entraînement à la boîte de vitesses à double embrayage (3) par l'intermédiaire d'un rapport de vitesse (G6) de la deuxième transmission partielle (9).

5. Procédé selon la revendication 4, **caractérisé en ce que** lorsque le mécanisme de verrouillage de stationnement (2) est activé, un rapport de vitesse (G1), notamment le rapport de vitesse ayant le rapport de transmission le plus élevé, est enclenché dans la première transmission partielle (8).

6. Procédé selon la revendication 5, **caractérisé en ce que** le couple est transmis du côté de la machine électrique (6) par l'intermédiaire de la deuxième transmission partielle (9), d'un deuxième embrayage (11) du double embrayage (4) qui est associé à la deuxième transmission partielle (9), de la machine à combustion interne (5), d'un premier embrayage (10) du double embrayage (4) qui est associé à la première transmission partielle (8), de la première transmission partielle (8) et du rapport de vitesse (G1) ayant le rapport de transmission le plus élevé à la sortie (7) du groupe motopropulseur hybride (1).
